# EUROPÄISCHE PATENTSCHRIFT

(11) **EP 3 724 904 B1**
(45) Veröffentlichungstag und Bekanntmachung des Hinweises auf die Patenterteilung: **25.02.2026**
(21) Anmeldenummer: 18833893.3
(22) Anmeldetag: 27.12.2018
(51) Int. Cl.: H01H 3/36, H01H 33/64, H01H 33/66

(54) **ELEKTRISCHE SCHALTEINRICHTUNG**
ELECTRICAL SWITCHING DEVICE
DISPOSITIF DE COMMUTATION ÉLECTRIQUE

(30) Priorität: 25.01.2018 DE 102018201151
(43) Veröffentlichungstag der Anmeldung: 21.10.2020
(73) Patentinhaber: Siemens Energy Global GmbH & Co. KG, 81739 München (DE)
(72) Erfinder: BARTZ, Michael, 12627 Berlin (DE); HARTUNG, Alexander, 13349 Berlin (DE); KREHNKE, Martin, 13595 Berlin (DE)
(86) Internationale Anmeldenummer: PCT/EP2018/097016
(87) Internationale Veröffentlichungsnummer: WO 2019/145110

(56) Entgegenhaltungen:
- EP-A1- 2 461 338
- WO-A1-2004/092604
- DE-A1- 102013 210 136
- DE-A1- 4 123 710

## Beschreibung

Die Erfindung betrifft eine elektrische Schalteinrichtung aufweisend ein mittels kinematischer Kette antreibbares Schaltkontaktstück, welches von einem von der kinematischen Kette fluiddicht durchsetzten ersten Kapselungsgehäuse umgeben ist.

Eine elektrische Schalteinrichtung ist beispielsweise aus der internationalen Veröffentlichung WO 2004/092604 A1 bekannt. Dort ist ein Hochspannungsleistungsschalter beschrieben, der zur Übertragung einer Bewegung eine kinematische Kette aufweist. Teil der kinematischen Kette ist eine Welle, welche gedichtet durch eine Wandung des Hochspannungsleistungsschalters hindurchgeführt ist. Um die Welle anzutreiben, weist diese einen Umlenkhebel mit einer Justiereinrichtung auf.

Eine derartige Konstruktion ermöglicht zwar über die Justiereinrichtung eine vereinfachte Justage der kinematischen Kette. Es ist jedoch notwendig, eine lineare Bewegung eines Antriebes in eine Drehbewegung zu wandeln, um diese anschließend wiederum in eine lineare Bewegung eines Kontaktstückes umzuformen. Insofern wird die Ausbildung der kinematischen Kette und damit der elektrischen Schalteinrichtung durch die zusätzlichen Bauteile verteuert. Weiterhin ist aufgrund der Vielzahl von relativ zueinander bewegbaren Bauteilen in der kinematischen Kette nach einer Anzahl von Schalthandlungen die kinematische Kette zu überprüfen und gegebenenfalls neu zu justieren.

Aus der EP2461338A1 ist ein Unterbrecherschalter für Hochspannungsanwendungen bekannt, bei dem in einem Schaltergehäuse ein Vakuum-Schalteinsatz angeordnet ist und eine isolierte Schaltstange, die durch den unteren Abschluss des Schaltergehäuses linear und abgedichtet geführt ist, einen Kontakt betätigen kann.

Aus der DE 10 2013 210 136 A1 ist ein elektrisches Schaltgerät bekannt, das zwei in Reihe verschaltete Kontaktstellen umfasst, wobei die beiden Kontaktstellen mittels individueller kinematischer Ketten betätigbar sind.

Der Offenlegungsschrift DE 41 23 710 A1 ist eine gasisolierte Schalteinrichtung entnehmbar. Zur Ausbildung der Schalteinrichtung ist ein Gasbehälter vorgesehen, in dessen Inneren ein Vakuumschalter angeordnet ist. Der Vakuumschalter weist ein festes sowie ein bewegliches Kontaktelement auf, um eine Schaltstelle zu bilden. Mittels einer isolierenden Stange ist eine lineare Bewegung auf das bewegliche Kontaktelement einkoppelbar. Ein dichtender Faltenbalg ist vorgesehen, um die lineare Bewegung zu führen und eine Dichtung am Gasbehälter sicherzustellen.

Somit ergibt sich als Aufgabe der Erfindung, eine elektrische Schalteinrichtung anzugeben, welche kostengünstig auch nach einer großen Anzahl von Schaltvorgängen eine stabile und energiearme Übertragung einer Antriebsbewegung auf ein antreibbares Schaltkontaktstück ermöglicht.

Erfindungsgemäß wird die Aufgabe bei einer elektrischen Schalteinrichtung der eingangs genannten Art durch die Merkmale des Patentanspruchs 1 gelöst.

Eine elektrische Schalteinrichtung dient einem Schalten eines Strompfades, welcher der Übertragung von elektrischer Energie dient. Beispielsweise weist der Strompfad dazu ein antreibbares Schaltkontaktstück auf, welches beispielsweise zu einem ortsfesten Schaltkontaktstück relativ bewegbar ist. Durch eine relative Bewegbarkeit der Schaltkontaktstücke zueinander kann eine galvanische Kontaktierung der Schaltkontaktstücke bei einem Einschaltvorgang hervorgerufen werden. Bei einem Ausschaltvorgang kann die galvanische Kontaktierung der relativ zueinander bewegbaren Schaltkontaktstücke aufgehoben werden. Somit ist mittels eines elektrischen Schaltgerätes die Impedanz innerhalb des zu schaltenden Strompfades veränderlich. Um zumindest eines der Schaltkontaktstücke anzutreiben ist eine entsprechende Einkoppelung einer Bewegung, die üblicherweise von einer Antriebseinrichtung ausgeht, auf das zumindest eine antreibbare Schaltkontaktstück vorzunehmen. Um eine Bewegung von der Antriebseinrichtung zu einem antreibbaren Schaltkontaktstück zu übertragen, kann eine kinematische Kette verwendet werden. Das antreibbare Schaltkontaktstück weist auf Grund des Schaltens eines elektrischen Stromes im Regelfalle ein gegenüber der Antriebseinrichtung abweichendes elektrisches Potential auf. Bevorzugt weist die kinematische Kette in ihrem Verlauf einen elektrisch isolierenden Abschnitt auf, so dass Erdschlüsse, Kurzschlüsse, Streuströme usw. über die kinematische Kette verhindert sind.

Je nach Anforderung kann die elektrische Schalteinrichtung für unterschiedliche Schaltleistungen ausgelegt sein. Beispielsweise kann es sich bei der elektrischen Schalteinrichtung um einen Trennschalter handeln, welcher lediglich im stromlosen Zustand zu schalten ist. Es kann sich bei der elektrischen Schalteinrichtung jedoch auch um einen Lastschalter oder um einen Leistungsschalter handeln. Ein Leistungsschalter ist in der Lage, sowohl Bemessungsströme als auch Kurzschlussströme zu beherrschen.

Bei dem antreibbaren Schaltkontaktstück kann es sich beispielsweise um ein Schaltkontaktstück handeln, welches von einem elektrisch isolierenden Fluid, insbesondere ein Gas, umspült ist. Als elektrisch isolierende Fluide können beispielsweise fluorhaltige Stoffe, wie Schwefelhexafluorid, Fluorketone, Fluornitrile usw. sowie andere Stoffe wie Kohlendioxid, Stickstoff, so genannte technische Luft sowie Gemische eingesetzt werden. Beispielsweise kann das Kapselungsgehäuse ein elektrisch isolierendes Fluid in seinem Innern einhausen und so eine separierte Atmosphäre um das antreibbare Schaltkontaktstück schaffen. Als elektrisch isolierende Fluide können beispielsweise auch flüssige Stoffe wie Isolieröle oder Ester zum Einsatz kommen. Im Sinne dieses Dokumentes ist unter einem elektrisch isolierenden Fluid auch ein Vakuum bzw. ein nahe dem idealen Vakuum befindlicher Unterdruck im Innern eines Kapselungsgehäuses zu verstehen. Bei einem Vakuum ist das dort befindliche "Fluid" mangels freier Ladungsträger in besonderer Weise geeignet, um einem Brennen eines Lichtbogens entgegenzuwirken. Die Ausgestaltung des antreibbaren Schaltkontaktstückes kann dabei je nach Wahl des elektrisch isolierenden Fluids variieren. Das antreibbare Schaltkontaktstück kann beispielsweise buchsenförmig oder bolzenförmig ausgeformt sein. Es kann jedoch auch vorgesehen sein, dass das antreibbare Schaltkontaktstück eine plattenartige Kontaktfläche aufweist, welche stumpf gegen ein Gegenkontaktstück gepresst werden kann. Um eine zuverlässige elektrische Kontaktierung zu erzielen, weist ein zum antreibbaren Schaltkontaktstück zugehöriges Gegenkontaktstück eine bevorzugt formkomplementäre Formgebung auf. Um besonders hohe Schaltleistungen zu beherrschen, kann das antreibbare Schaltkontaktstück auch unterschiedliche Abschnitte aufweisen, beispielsweise einen Vorkontaktabschnitt sowie einen Hauptkontaktabschnitt. Lichtbögen werden bevorzugt am Vorkontaktabschnitt geführt, so dass ein Abbrand bevorzugt dort auftritt, wodurch ein Hauptkontaktabschnitt des antreibbaren Schaltkontaktstückes vor Abbrand geschützt ist.

Eine lineare Hindurchführung der kinematischen Kette durch das Kapselungsgehäuse weist den Vorteil auf, dass eine aufwändige Umformung einer Bewegung allein zum Zwecke der Übertragung der Bewegung durch eine Wandung hindurch vermieden ist. Dadurch kann die kinematische Kette in ihrem Aufbau vereinfacht werden. Weiterhin ergeben sich neue Möglichkeiten, um eine Dichtwirkung der kinematischen Kette gegenüber dem ersten Kapselungsgehäuse vorzunehmen. Beispielsweise kann die kinematische Kette selbst eine Öffnung im ersten Kapselungsgehäuse zumindest teilweise verschließen, wobei durch eine Dichtung eine lineare Dichtung übernommen werden kann. Als Dichtung kann beispielsweise ein teleskopierbarer Abschnitt genutzt werden, welcher einen fluiddichten Verbund zwischen kinematischer Kette und dem ersten Kapselungsgehäuse ausbildet.

Erfindungsgemäß ist vorgesehen, dass das erste Kapselungsgehäuse ein zweites Kapselungsgehäuse umgibt, wobei im ersten Kapselungsgehäuse ein erster Druck und im zweiten Kapselungsgehäuse ein zweiter Druck herrscht, wobei die beiden Drücke voneinander abweichen.

Die Nutzung eines ersten Kapselungsgehäuse sowie eines zweiten Kapselungsgehäuses, welches sich im Innern des ersten Kapselungsgehäuses erstreckt, gestattet es, die Spannungsfestigkeit der elektrischen Schalteinrichtung zu erhöhen. Beispielsweise kann das zweite Kapselungsgehäuse mit einem Fluid befüllt sein, welches von einem im Innern des erste Kapselungsgehäuses befindlichen Fluid abweicht. Dadurch ist die Möglichkeit gegeben, eine kaskadenartige Steuerung einer Spannungsverteilung zu erzielen. Beispielsweise kann das erste Kapselungsgehäuse mit einer elektrisch isolierenden Flüssigkeit befüllt sein, welche das zweite Kapselungsgehäuse umspült, wo hingegen im zweiten Kapselungsgehäuse beispielsweise ein elektrisch isolierendes Gas angeordnet ist. Dadurch ist weiterhin eine Schutzfunktion für das zweite Kapselungsgehäuse gegeben, da dieses durch das erste Kapselungsgehäuse vor unmittelbarer äußerer mechanischer Belastung geschützt ist. In einer bevorzugten Variante weist das erste Kapselungsgehäuse ein elektrisch isolierendes Fluid auf, insbesondere ein Gas, welches mit einem ersten Druck beaufschlagt ist, wo hingegen im zweiten Kapselungsgehäuse ein Unterdruck, insbesondere ein Vakuum befindlich ist, so dass der Druck im ersten Kapselungsgehäuse bevorzugt größer ist als der Druck im Innern des zweiten Kapselungsgehäuses.

Bei einer Anordnung eines zweiten Kapselungsgehäuses innerhalb des ersten Kapselungsgehäuses kann vorteilhaft vorgesehen sein, dass die kinematische Kette eine Wandung des ersten Kapselungsgehäuses sowie eine Wandung des zweiten Kapselungsgehäuses durchsetzt. Bevorzugt kann vorgesehen sein, dass dabei ein Durchsetzen der Wandung des ersten Kapselungsgehäuses sowie ein Durchsetzen der Wandung des zweiten Kapselungsgehäuses linear gedichtet erfolgt. Vorteilhafterweise kann vorgesehen sein, dass ein Durchsetzen der beiden Kapselungsgehäuse jeweils fluchtend entlang einer Achse erfolgt. Damit kann eine mechanisch vereinfachte Anordnung der Kapselungsgehäuse sowie Übertragung der Bewegung von einer Antriebseinrichtung, die außerhalb sowohl des ersten als auch außerhalb des zweiten Kapselungsgehäuses angeordnet ist, erfolgen. Eine Dichtung sowohl bei einem Hindurchtreten der kinematischen Kette durch das erste Kapselungsgehäuse als auch bei einem Durchtreten der kinematischen Kette durch das zweite Kapselungsgehäuse kann linear dichtend erfolgen. Insbesondere bei einer Verwendung eines reversibel verformbaren Abschnitts kann vorgesehen sein, dass die reversible Umformung am ersten Kapselungsgehäuse bei einer Bewegung der kinematischen Kette in umgekehrter Weise erfolgt als bei einer Passage der kinematischen Kette durch das zweite Kapselungsgehäuse. Mit anderen Worten, während an der Passage des ersten Kapselungsgehäuses eine Streckung eines reversibel verformbaren Abschnittes erfolgt, findet umgekehrt am zweiten Kapselungsgehäuse eine Stauchung eines reversibel verformbaren Abschnittes statt. In einem Idealfall kompensieren sich Stauchungs- und Streckungskräfte an den beiden reversibel verformbaren Abschnitten, so dass gegebenenfalls unterstützt durch eine Druckdifferenz unnötige Antriebsenergien zur Überwindung von Druckdifferenzen reduziert sind.

Erfindungsgemäß ist vorgesehen, dass der erste Druck größer als der zweite Druck ist.

Insbesondere bei der Verwendung eines Unterdruckes im zweiten Kapselungsgehäuse kann so eine stufenartige Reduktion bzw. ein stufenartiger Übergang der Druckverhältnisse über die beiden Kapselungsgehäuse erzeugt werden. Dadurch ist jedes der Kapselungsgehäuse jeweils lediglich bezüglich des Differenzdruckes auszulegen. Gegenüber einem einzelnen Kapselungsgehäuse weist dies den Vorteil auf, dass überdimensionierte Druckbehälter vermieden sind. Weiterhin kann durch das "Kapselungsgehäuse im Kapselungsgehäuse" Konzept eine Optimierung der zu verwendenden Materialien zur Ausbildung des ersten sowie des zweiten Kapselungsgehäuses vorgenommen werden. Aufgrund der Verwendung des ersten Kapselungsgehäuses wird dem zweiten Kapselungsgehäuse eine definierte Umgebung zur Verfügung gestellt, so dass dieses beispielsweise bezüglich elektrisch isolierender Parameter optimiert werden kann, ohne auf die äußere Umgebung des ersten Kapselungsgehäuses Rücksicht nehmen zu müssen. Das erste Kapselungsgehäuse schirmt das zweite Kapselungsgehäuse vor Umweltbeeinflussungen ab.

Vorteilhaft kann vorgesehen sein, dass ein das erste Kapselungsgehäuse umgebender Druck kleiner als der erste Druck ist, wobei der das erste Kapselungsgehäuse umgebende Druck größer oder gleich dem zweiten Druck ist.

Durch die Verwendung eines Druckes im ersten Kapselungsgehäuse, der sowohl gegenüber dem Druck im zweiten Kapselungsgehäuse als auch gegenüber der Umgebung des ersten Kapselungsgehäuses größer ist, ist die Möglichkeit gegeben, im zweiten Kapselungsgehäuse einen Druck vorzusehen, der sowohl gegenüber dem ersten Kapselungsgehäuse als auch gegenüber dem Druck der Umgebung des ersten Kapselungsgehäuses reduziert ist. Entsprechend wird insbesondere bei einer Ausschaltbewegung durch die sich ergebende Druckkaskade eine Bewegung unterstützt, da die Differenzdrücke sich insbesondere bei einer Ausschaltbewegung kompensieren, so dass in einem Idealfall eine vollständige differenzdruckfreie Relativbewegung mittels der kinematischen Kette übertragen werden kann. Ein im zweiten Kapselungsgehäuse angeordnetes antreibbares Schaltkontaktstück ist aufgrund des "Kapselungsgehäuses im Kapselungsgehäuse" Konzept auch innerhalb des ersten Kapselungsgehäuses angeordnet. Insbesondere bei Verwendung einer Vakuumschaltkammer zur Ausbildung des zweiten Kapselungsgehäuses kann so eine energiearme Antriebseinrichtung verwendet werden, um das antreibbare Schaltkontaktstück in eine Bewegung zu versetzen. Auf unnötige Antriebsenergie, die z.B. zum Überwinden von Druckpolstern nötig wäre, kann so verzichtet werden.

Es ist vorgesehen, dass die kinematische Kette, insbesondere eine Schaltstange der kinematischen Kette an dem ersten Kapselungsgehäuse linear bewegbar geführt ist.

Durch eine lineare Führung der kinematischen Kette kann diese in einfacher Form eine Bewegung in das Innere des ersten Kapselungsgehäuses übertragen. Die kinematische Kette kann dabei bevorzugt eine Schaltstange aufweisen, wobei die Schaltstange entlang der Schaltstangenlängsachse linear bewegbar gelagert ist. Eine Stützung der kinematischen Kette, insbesondere der Schaltstange kann dabei an dem ersten Kapselungsgehäuse erfolgen. Dadurch ist eine leicht bauende kinematische Kette ermöglicht, welche vor einem Ausbuckeln und Ausbauchen oder weiteren unerwünschten Bewegungen geschützt ist. Weiterhin kann durch die Führung am ersten Kapselungsgehäuse eine definierte Relativlage zwischen kinematischer Kette und erstem Kapselungsgehäuse hervorgerufen werden. Dies erleichtert die Ausgestaltung einer Dichtung zwischen kinematischer Kette und Kapselungsgehäuse. Insbesondere kann durch die Führung am ersten Kapselungsgehäuse einem Ermüden einer Dichtung vorgebeugt werden.

Die Ausgestaltung sieht vor, dass ein reversibel verformbarer Abschnitt, insbesondere ein Balg eine lineare Dichtung übernimmt.

Eine lineare Dichtung kann durch Verwendung eines reversibel verformbaren Abschnittes hergestellt werden. Ein reversibel verformbarer Abschnitt weist den Vorteil auf, dass verschiedene Bereiche des reversibel verformbaren Abschnittes winkelstarr gefasst werden können, wobei eine Relativbewegung zwischen den winkelstarr befestigten Fassungen erfolgen kann. Dadurch kann eine in sich geschlossene dichtende Wandung hergestellt werden, welche einerseits das erste Kapselungsgehäuse verbindet und andererseits mit der kinematischen Kette, insbesondere mit einer Schaltstange verbunden ist. Beispielsweise kann der reversibel verformbare Abschnitt nach Art einer Manschette fluiddicht mit der kinematischen Kette, insbesondere mit einer Schaltstange, verbunden sein. Die Manschette kann bevorzugt aus fluiddichtem Material, insbesondere einem metallischen Material oder einer metallischen Beschichtung gebildet werden. Besonders vorteilhaft kann der reversibel verformbare Abschnitt in Form eines Balges ausgebildet sein. Der Balg kann beispielsweise durch eine Faltung/Wellung eine Oberflächenvergrößerung erfahren, so dass zur Realisierung großer Relativbewegung beispielsweise großer Hübe eine reversible Verformung über eine Vielzahl von Wellungen erfolgt, so dass einer punktuellen Überlastung des reversibel verformbaren Abschnittes entgegengewirkt ist. Beispielsweise kann der Balg nach Art einer Hülse ausgeformt sein, welcher an entgegengesetzt angeordneten Stirnseiten einerseits mit der kinematischen Kette und andererseits mit dem ersten Kapselungsgehäuse fluiddicht verbunden sein kann. Beispielsweise kann der reversibel verformbare Abschnitt zum Verbinden desselben mit der kinematischen Kette bzw. mit dem ersten Kapselungsgehäuse mit Flanschen versehen sein. Die Flansche können beispielsweise stoffschlüssig mit dem reversibel verformbaren Abschnitt verbunden sein, wobei die Flansche wiederum beispielsweise mittels Schraubverbindung einen fluiddichten Verbund zu der Schaltstange und/oder zu einem entsprechend formkomplementären Bereich des ersten Kapselungsgehäuses ausbilden können.

Erfindungsgemäß ist vorgesehen, dass das erste Kapselungsgehäuse einen Kragen aufweist, in welchem die kinematische Kette, insbesondere die Schaltstange linear verschiebbar geführt ist.

Das erste Kapselungsgehäuse kann einen Kragen aufweisen. Bevorzugt kann das Kapselungsgehäuse einen Kragen aufweisen, der eine Öffnung in demselben begrenzt, so dass ein Lenken bzw. Leiten der kinematischen Kette, insbesondere der Schaltstange ermöglicht ist. Durch ein formkomplementäres Ausbilden von kinematischer Kette und Kragen wird so einerseits eine stabile axiale Führung erzielt, andererseits wird der zu dichtende Abschnitt zwischen kinematischer Kette und dem Kapselungsgehäuse, hier insbesondere gegenüber dem Kragen, vereinfacht ermöglicht. Der sich zwischen Kragen und kinematischer Kette, insbesondere bei Verwendung einer Schaltstange, ergebende Ringspalt kann genutzt werden, um beispielsweise die Lineardichtung anzuordnen. Dadurch wird die Lineardichtung in einem Bereich gehalten, welcher von Schaltstange und Kragen einen mechanischen Schutz erfährt. Gleichzeitig wird die Führung der kinematischen Kette und damit eine gegebenenfalls reversible Verformung eines reversibel verformbaren Abschnittes geleitet. Ein unerwünschtes Ausbauchen und Ausbuckeln wird durch den Kragen so verhindert. Der Kragen kann dabei eine Öffnung innerhalb des Kapselungsgehäuses begrenzen und so einen Rahmen für dieselbe bieten. Der Kragen erstreckt sich somit im Wesentlichen quer zu einer Öffnung in dem Kapselungsgehäuse, so dass der Kragen bevorzugt in die Hüllkontur des Kapselungsgehäuses eingezogen sein kann. Der Kragen kann sich jedoch auch über die Hüllkontur des Kapselungsgehäuses nach außen erstrecken oder sich sowohl im Innern als auch außerhalb der Hüllkontur des Kapselungsgehäuses fortsetzen. Der Kragen kann einen Teil einer fluiddichten Barriere darstellen, um ein Entweichen eines elektrisch isolierenden Fluids aus dem ersten Kapselungsgehäuse zu verhindern.

Erfindungsgemäß ist weiter vorgesehen, dass der Kragen Teil einer Tasche in dem ersten Kapselungsgehäuse ist.

Das erste Kapselungsgehäuse weist eine Hüllkontur auf, welche die äußere Grenze des ersten Kapselungsgehäuses bestimmt. Der Kragen kann Teil einer Tasche sein, welche sich in das Innere des ersten Kapselungsgehäuses hineinzieht und so den Aufnahmeraum im Innern des ersten Kapselungsgehäuses reduziert. Entsprechend wird in das erste Kapselungsgehäuse eingezogen ein Raum geschaffen, um mechanisch geschützt die kinematische Kette in das Innere des Kapselungsgehäuses einzuführen und beispielsweise auch einen reversibel verformbaren Abschnitt zu positionieren. Somit wird zum einen durch die Linearführung am Gehäuse eine stabile Führung der kinematischen Kette bewirkt, zum anderen wird durch das Einsenken des Kragens zur Ausbildung einer Tasche ein mechanisch sowie gegebenenfalls dielektrisch geschirmter Raum zur Anordnung der kinematischen Kette geschaffen. Die Tasche kann einer Passage der kinematischen Kette in das Innere des ersten Kapselungsgehäuses dienen.

Erfindungsgemäß ist weiter vorgesehen, dass die Tasche eine veränderbare Scheidewand aufweist.

Durch eine Tasche ist in dem ersten Kapselungsgehäuse eine Senkung gebildet, bzw. eine eingesenkte Ausnehmung, wobei mittels einer veränderbaren Scheidewand insbesondere die Tiefe der Tasche veränderlich ist. Die Veränderbarkeit der Scheidewand kann in einer Verschiebbarkeit begründet sein. Beispielsweise kann die Scheidewand durch einen Abschnitt der kinematischen Kette, insbesondere einen Abschnitt einer Schaltstange, gebildet werden, wobei die Scheidewand auch einer Führung der kinematischen Kette dienen kann. Beispielsweise kann die Schaltstange einen kolbenartigen Abschnitt aufweisen, welcher in den Kragen gleitbeweglich geführt ist. Der gleitbeweglich geführte Abschnitt kann somit die Scheidewand bilden, wobei bei einer Relativbewegung des antreibbaren Schaltkontaktstückes die Scheidewand sich längs des Kragens bewegt und so die Tiefe der Tasche variiert.

Vorteilhafterweise kann vorgesehen sein, dass der Kragen in eine Flanschöffnung des ersten Kapselungsgehäuses hineinragt.

Das erste Kapselungsgehäuse kann verschiedenartig aufgebaut sein. Beispielsweise kann das erste Kapselungsgehäuse im Wesentlichen rotationssymmetrisch ausgebildet sein, wobei das erste Kapselungsgehäuse dazu beispielsweise einen hohlzylindrischen, insbesondere elektrisch isolierenden Grundkörper aufweist. Um den hohlzylindrischen Grundkörper des ersten Kapselungsgehäuses zu komplettieren, können an diesem endseitig Flanscharmaturen angeordnet sein, die fluiddicht mit dem Grundkörper verbunden sind. Dadurch ist ein stirnseitiger Abschluss und ein stirnseitiger Umgriff des Grundkörpers mit den Armaturflanschen gegeben. Die Armaturflansche weisen dabei eine Flanschöffnung auf, in welche der Kragen hineinragen kann. Der Kragen kann fluiddicht mit einem Flansch verbunden sein. Dadurch ist eine Möglichkeit gegeben, stirnseitig an dem ersten Kapselungsgehäuse eine Bewegung in das Innere des ersten Kapselungsgehäuses einzuleiten. Insbesondere an einem Armaturflansch des ersten Kapselungsgehäuses kann beispielsweise ein Kragen in Form eines rohrförmigen Einsatzes vorgesehen sein, welcher in das Innere des ersten Kapselungsgehäuses hineinragt. Entsprechend kann der Kragen an einem freien Ende, welches in Richtung des Inneren des ersten Kapselungsgehäuses hineinragt, einen fluiddichten Verbund mit einem reversibel verformbaren Abschnitt, insbesondere in Form eines im Wesentlichen hohlzylindrischen Faltenbalges vorgesehen sein. Der Faltenbalg erstreckt sich dabei, umgeben von dem Kragen, innerhalb des Kragens. Mit seinem anderen Ende kann der reversibel verformbare Abschnitt mit einer Schaltstange verbunden sein, welche ebenfalls von dem Kragen umgriffen ist. Die Schaltstange kann dazu mit dem reversibel verformbaren Balg fluiddicht verbunden sein. Bevorzugt kann der fluiddichte Verbund zwischen Schaltstange und reversibel verformbaren Abschnitt dort erfolgen, wo die Schaltstange eine kolbenartige Verdickung aufweist, wobei die kolbenartige Verdickung in gleitbeweglicher Kontaktierung mit dem Innern des Kragens steht. Dadurch ist an der elektrischen Schalteinrichtung in dem ersten Kapselungsgehäuse eine Tasche gebildet, die eine bewegbare Scheidewand aufweist.

Erfindungsgemäß ist vorgesehen, dass der reversibel verformbare Abschnitt sich zwischen Schaltstange und Kragen erstreckt.

Vorteilhafterweise kann zwischen der Schaltstange sowie dem Kragen ein Ringspalt verbleiben, innerhalb welchem sich der reversibel verformbare Abschnitt erstreckt. Insbesondere bei Verwendung eines im Wesentlichen hohlzylindrischen Faltenbalges kann die Faltung des Faltenbalges derart gewählt sein, dass die konvexen Abschnitte des Faltenbalges innen- und/oder außenmantelseitig jeweils eine radiale Stützung am Kragen bzw. an der Schaltstange erfahren. Dadurch wird die Faltung des reversibel verformbaren Abschnittes weiterhin unterstützt, wobei eine radial schlanke Struktur gebildet ist, welche einen dauerhaften fluiddichten Verbund zwischen Schaltstange, Kragen und damit einen fluiddichten Verschluss einer Öffnung in dem ersten Kapselungsgehäuse dient.

Vorteilhafterweise kann vorgesehen sein, dass Schaltstange, reversibel verformbarer Abschnitt und Kragen zueinander koaxial ausgerichtet angeordnet sind.

Rotationssymmetrische Strukturen sind geeignet, um auch im Bereich von hohen elektrischen Feldern einem Entstehen von Teilentladungen entgegen zu wirken. Durch Rundungen und kreisförmige Strukturen sind Spitzen vermieden, an welchen sich Ladungsträger lösen könnten. Entsprechend sind eine rotationsymmetrische Schaltstange, ein rotationssymmetrischer reversibel verformbarer Abschnitt sowie ein rotationssymmetrischer Kragen von Vorteil, wobei diese bevorzugt koaxial zueinander ausgerichtet sein sollten. Dabei sollte die koaxiale Ausrichtung derart vorgesehen sein, dass der Kragen, der reversibel verformbare Abschnitt sowie die Schaltstange einander zumindest abschnittsweise umgreifen bzw. ineinander eintauchen.

Vorteilhafterweise kann vorgesehen sein, dass zwischen Schaltstange und reversibel verformbarem Abschnitt und/oder zwischen reversibel verformbarem Abschnitt und Kragen eine Balgführung angeordnet ist.

Eine Relativbewegung zwischen Schaltstange und Kragen und einer dadurch erfolgenden ausgelösten Umformung des reversibel verformbaren Abschnittes führt zu einer axialen Verschiebung der einzelnen Elemente relativ zueinander. Durch die Verwendung einer Balgführung können Fertigungstoleranzen oder Dimensionsabweichungen zwischen Kragen, reversibel verformbarem Abschnitt und Schaltstange ausgeglichen werden. Die Balgführung kann beispielsweise einen verbleibenden Ringspalt zwischen Schaltstange und reversibel verformbarem Abschnitt befüllen. Dadurch wird der Querschnitt der Schaltstange vergrößert, wobei der reversibel verformbare Abschnitt, insbesondere konvexe Bereiche eines Faltenbalges auf der Balgführung abgestützt werden können. Dadurch wird die Schaltstange vor mechanischer Belastung, die beispielsweise zu Abrasionen führen könnte, geschützt. Die Balgführung weist bevorzugt eine reibungsreduzierende Eigenschaft auf. Beispielsweise ist die Balgführung aus einem elektrisch isolierenden Material, wie z. B. Polytetrafluorethylen oder Polyethylen gefertigt. Bevorzugt ist die Balgführung zur Schaltstange oder zum Kragen relativ ortsfest fixiert, so dass der reversibel verformbare Abschnitt an einem Gegenlager, welches durch die Balgführung gebildet ist, entlang gleiten kann.

Eine weitere vorteilhafte Ausgestaltung kann vorsehen, dass die linear bewegbare Schaltstange über ein Kniehebelgetriebe der kinematischen Kette angesteuert ist.

Durch die Nutzung eines Kniehebelgetriebes ist die Möglichkeit gegeben, beispielsweise mittels eines Federspeicherantriebes in einer Speicherfeder gespeicherte Energie in eine Bewegung für das antreibbare Schaltkontaktstück zu wandeln. Durch das Kniehebelgetriebe kann in Abhängigkeit der Strecklage des Kniehebelgetriebes ein sich änderndes Übersetzungsverhältnis zur Verfügung gestellt werden. Insbesondere nahe der Strecklage kann ein kleines Übersetzungsverhältnis erzielt werden, wodurch trotz vergleichsweise großer Bewegung der Antriebseinrichtung diese aufgrund der gestreckten Hebelverhältnisse lediglich zu einer kleinen Bewegung am antreibbaren Schaltkontaktstück führt. Umgekehrt kann bei einem Einnehmen einer spitzwinkligen Lage des Kniehebelgetriebes mit einer kleinen Bewegung von Antriebseinrichtung eine vergleichsweise große Bewegung am antreibbaren Schaltkontaktstück erzielt werden. Umgekehrt verhält es sich mit den notwendigen Momenten, welchen zur Verfügung gestellt werden müssen, um eine Bewegung kurz vor oder nach Strecklage am Kniehebel bzw. kurz vor oder nach einer spitzwinkligen Lage des Kniehebelgetriebes zu erzeugen. So ist es beispielsweise möglich, ein sicheres Verklinken des antreibbaren Schaltkontaktstückes in Strecklage des Kniehebelgetriebes vorzunehmen, da eine zur Erzielung einer Verklinkung notwendige Bewegung nur geringfügig auf das antreibbare Schaltkontaktstück übertragen wird. Insbesondere bei einem Ausschaltvorgang bietet die Nutzung der Strecklage den Vorteil, dass ein Losreißen des antreibbaren Schaltkontaktstückes durch ein Einbrechen des Kniehebelgetriebes unterstützt wird, so dass ein großes Losreißmoment am antreibbaren Schaltkontaktstück zur Verfügung steht. Das Kniehebelgetriebe bzw. eine Koppel des Kniehebelgetriebes kann bevorzugt mit einer Schaltstange der kinematischen Kette schwenkbeweglich verbunden sein. Insbesondere kann die Koppel mit dem Abschnitt der Schaltstange verbunden sein, welcher eine fluiddichte Barriere ausbildet und damit einem linearen Dichten der kinematischen Kette gegenüber dem ersten Kapselungsgehäuse dient.

Vorteilhafterweise kann vorgesehen sein, dass im Einschaltzustand der elektrischen Schalteinrichtung das Kniehebelgetriebe der kinematischen Kette in Strecklage befindlich ist.

Im Einschaltzustand befindet sich die kinematische Kette bzw. das Kniehebelgetriebe der kinematischen Kette in Strecklage. Dadurch ist ein unerwünschtes Zusammenbrechen des Kniehebelgetriebes in der Einschaltstellung erschwert. Insbesondere kann die Strecklage derart genutzt werden, dass Haltekräfte zur Positionierung des antreibbaren Schaltkontaktstückes in der Einschaltstellung über eine Linie der Kniehebel des Kniehebelgetriebes übertragen werden.

Durch die Verwendung einer Strecklage sowie der Verwendung eines Kniehebelgetriebes besteht die Möglichkeit, einen herkömmlichen Federspeicherantrieb zu verwenden. Ein Federspeicherantrieb weist eine Speicherfeder auf, welche Energie zum Antreiben eines antreibbaren Schaltkontaktstückes zur Verfügung stellt. Die Speicherfeder ist dazu zunächst aufzuladen. Dabei kann die Speicherfeder Energie für mehrere Schaltvorgänge beispielsweise einen AUS-EIN-AUS-Zyklus zur Verfügung stellen. Die Antriebseinrichtung kann dabei dazu dienen, die Lage des antreibbaren Schaltkontaktstückes im Einschaltzustand und auch im Ausschaltzustand zu definieren. Um einen Ausschaltzustand zu erzielen, kann die Antriebseinrichtung einen Anschlag aufweisen, gegen welchen die kinematische Kette läuft, so dass ein Überhub des antreibbaren Schaltkontaktstückes durch den Anschlag verhindert ist. Bei einem Einschaltvorgang kann die Antriebseinrichtung eine entsprechende Verklinkung aufweisen, um die Einschaltposition des antreibbaren Schaltkontaktstückes festzulegen. Die Klinke kann dabei derart ausgestaltet sein, dass beispielsweise ein geringfügiges Freilassen der in der Speicherfeder gespeicherten Energie zum Sichern der Verklinkung genutzt wird. Mit einem Öffnen der Verklinkung wird auch die Speicherfeder freigegeben, wodurch diese die in ihr gespeicherte Energie zumindest teilweise freigibt. Diese Energie wird durch die Antriebseinrichtung in eine Bewegung gewandelt, welche über die kinematische Kette auf das antreibbare Schaltkontaktstück (insbesondere für einen Ausschaltvorgang) übertragen wird.

Im Folgenden wird ein Ausführungsbeispiel der Erfindung schematisch gezeigt und nachfolgend näher beschrieben. Dabei zeigt die
- Figur 1:: einen Schnitt durch eine schematisierte elektrische Schalteinrichtung im Ausschaltzustand; die
- Figur 2:: die aus der Figur 1 bekannte elektrische Schalteinrichtung in einem Zwischenzustand; die
- Figur 3:: die aus den Figuren 1 und 2 bekannte elektrische Schalteinrichtung im Einschaltzustand; die
- Figur 4:: einen Schnitt durch einen Schaltpol der elektrischen Schalteinrichtung im Einschaltzustand; die
- Figur 5:: den Schnitt, wie aus der Figur 4 bekannt, im Ausschaltzustand des elektrischen Schaltgerätes.

Bei der elektrischen Schalteinrichtung handelt es sich um einen so genannten Leistungsschalter, welcher in mehrphasiger Ausführung vorliegt. Die Erfindung ist auch bei einpoligen, zweipoligen usw. Schaltgeräten anwendbar. Vorliegend weist die elektrische Schalteinrichtung drei Schaltpole L1, L2, L3 auf, welche im Wesentlichen gleichartig aufgebaut sind. Die Schaltpole L1, L2, L3 weisen jeweils ein bewegbares Schaltkontaktstück 2 sowie ein ortsfestes Schaltkontaktstück 3 auf. Um eine Schalthandlung mit der elektrischen Schalteinrichtung durchführen zu können, ist eine Relativbewegung zwischen den jeweiligen bewegbaren und ortsfesten Schaltkontaktstücken 2, 3 durchzuführen. Um die notwendige Antriebsenergie bereitzustellen, ist eine gemeinsame Antriebseinrichtung 4 vorgesehen. Die gemeinsame Antriebseinrichtung 4 ist beispielsweise ein elektrodynamischer Antrieb, ein hydraulischer Antrieb oder ein so genannter Federspeicherantrieb. Über eine kinematische Kette 5 wird die Bewegung, welche von der gemeinsamen Antriebseinrichtung 4 abgegeben wird, übertragen und bis zum den bewegbaren Schaltkontaktstücken 2 der Schaltpole L1, L2, L3 verteilt. Durch die Verteilung der Bewegung über die kinematische Kette 5 von der gemeinsamen Antriebseinrichtung 4 zu den mehreren Schaltpolen L1, L2, L3 kann auf separate Antriebseinrichtungen für jeden der Schaltpole L1, L2, L3 verzichtet werden.

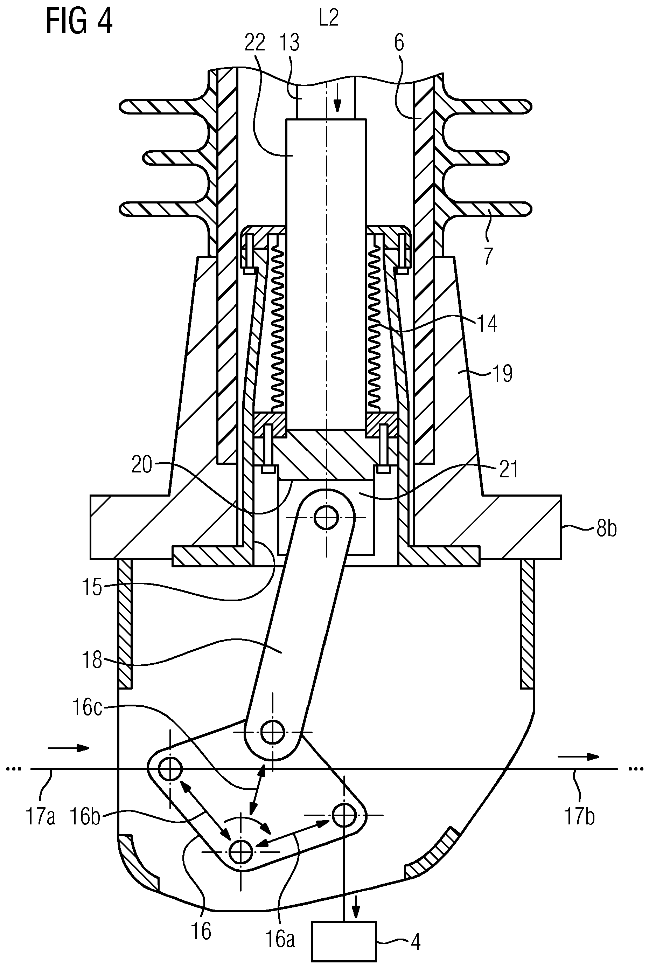

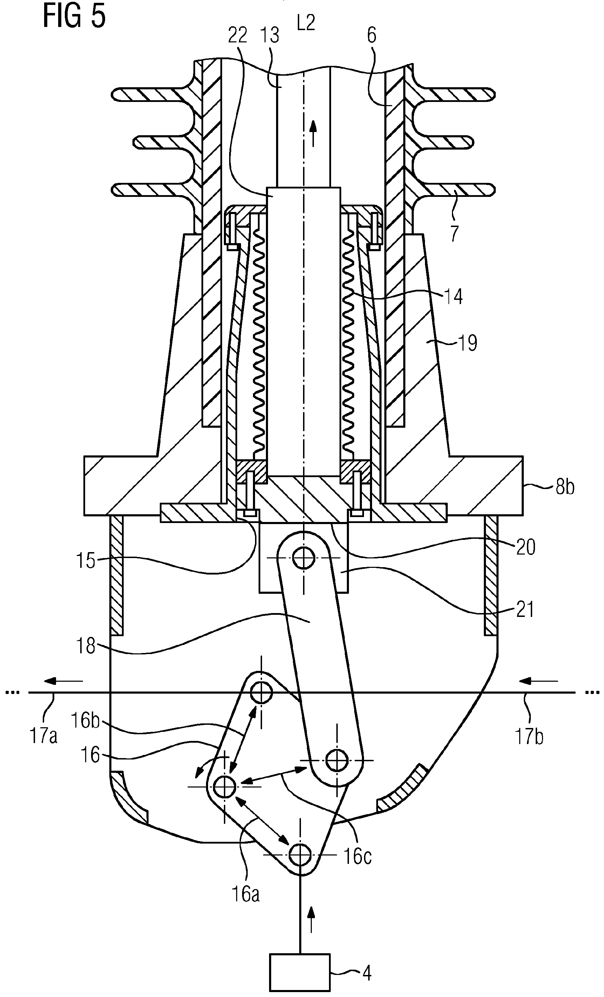

Anhand des Schaltpoles L2 soll nunmehr zunächst der Aufbau eines Schaltpoles exemplarisch beschrieben werden. Die Schaltpole L1, L2, L3 sind dabei gleichartig aufgebaut. Der Schaltpol L2 weist ein erstes Kapselungsgehäuse 6 auf. Das erste Kapselungsgehäuse 6 ist im Wesentlichen hohlzylindrisch ausgestaltet, wobei mantelseitig eine Verwendung eines elektrisch isolierenden Werkstoffes vorgesehen ist, beispielsweise kann hier eine Keramik oder auch ein organischer Verbundwerkstoff eingesetzt werden. Bei der Nutzung der Schaltpole L1, L2, L3 in Freiluftaufstellung kann mantelseitig eine Beschirmung 7 (vgl. Figuren 4 und 5) vorgesehen sein, um Kriechwege zu verlängern. Die Beschirmung kann beispielsweise bei der Verwendung eines glasfaserverstärkten Grundkörpers zur Ausbildung des ersten Kapselungsgehäuses 6 außenmantelseitig durch eine Silikonbeschichtung ausgebildet sein. Stirnseitig ist der hohlzylindrische Grundkörper des ersten Kapselungsgehäuses 6 mit einem ersten sowie einem zweiten elektrisch leitenden Abschlusselement 8a, 8b fluiddicht verschlossen.

Im Innern des ersten Kapselungsgehäuses 6 ist ein zweites Kapselungsgehäuse 9 angeordnet. Das zweite Kapselungsgehäuse 9 ist dem ersten Kapselungsgehäuse 6 ähnelnd aufgebaut. Auch hier ist die Verwendung eines hohlzylindrischen Grundkörpers vorgesehen, welcher im Wesentlichen aus Isoliermaterial gebildet ist. Als Isoliermaterial kann bevorzugt eine Keramik vorgesehen sein. Gegebenenfalls können auch noch Elektroden oder ähnliches an dem zweiten Kapselungsgehäuse 9 (und/oder am ersten Kapselungsgehäuse 6) befindlich sein. Das zweite Kapselungsgehäuse 9 ist beabstandet zum ersten Kapselungsgehäuse 6 in dessen Inneren ortsfest gelagert. Die Endseiten des zweiten Kapselungsgehäuses 9 sind analog zum ersten Kapselungsgehäuse 6 mit einem ersten und einem zweiten elektrisch leitenden Abschlusselement 10a, 10b fluiddicht verschlossen. Das ortsfeste Schaltkontaktstück 3 sitzt auf einem Stiel auf, welcher ortsfest mit dem ersten elektrisch leitenden Verschlusselement 10a des zweiten Kapselungsgehäuses 9 verbunden ist. Entsprechend ist das ortsfeste Schaltkontaktstück 3 relativ zum zweiten Kapselungsgehäuse 9 unbeweglich gehalten. Weiterhin ist das erste elektrisch leitende Abschlusselement 10a des zweiten Kapselungsgehäuses 9 mit dem ersten elektrisch leitenden Abschlusselement 8a des ersten Kapselungsgehäuses 6 elektrisch leitend und winkelstarr verbunden, so dass eine elektrische Kontaktierung 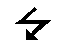 des elektrischen ortsfesten Schaltkontaktstückes 3 über das erste elektrisch leitende Verschlusselement 8a des ersten Kapselungsgehäuse 6 erfolgen kann.

Das bewegbare Schaltkontaktstück 2 sitzt auf einem Stiel auf, welcher das zweite elektrisch leitende Abschlusselement 10b des zweiten Kapselungsgehäuses 9 durchsetzt. Außerhalb des zweiten Kapselungsgehäuses 9 und innerhalb des ersten Kapselungsgehäuses 6 ist eine elektrische Kontaktierung 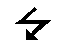 des das bewegbare Schaltkontaktstück 2 tragenden Stiels vorgesehen, wobei eine Anschlussfahne durch eine elektrisch isolierende Wandung des ersten Kapselungsgehäuses 6 nach außen geführt ist. Dadurch ist eine Einbindung der zwischen den beiden Schaltkontaktstücken 2, 3 befindlichen Schaltstrecke in ein Elektroenergieübertragungsnetz möglich.

Um eine fluiddichte Hindurchführung des das bewegbare Schaltkontaktstück 2 tragenden Stiels zu ermöglichen, ist ein Faltenbalg 11 vorgesehen, welcher sich konzentrisch um den Stiel (Antriebsstange) des bewegbaren Schaltkontaktstückes 2 erstreckt und innenseitig mit dem zweiten elektrisch leitenden Abschlusselement 10b verbunden ist. Bei einer Relativbewegung des bewegbaren Schaltkontaktstückes 2 zu dem zweiten Kapselungsgehäuse 9 ist so ein fluiddichter Abschluss des Innern des zweiten Kapselungsgehäuses 9 gegenüber dem Innern des ersten Kapselungsgehäuses 6 gegeben.

Um eine Bewegung auf das bewegbare Schaltkontaktstück 2 übertragen zu können, ist in der kinematischen Kette 5 eine Kontaktandruckfeder 12 angeordnet, welche innerhalb des ersten Kapselungsgehäuses 6 angeordnet ist. An die Kontaktandruckfeder 12 schließt sich ein elektrisch isolierender Bereich einer Antriebsstange 13 an. Beispielsweise kann die Antriebsstange 13 zumindest abschnittsweise glasfaserverstärkten Kunststoff aufweisen. Abschnittsweise kann die Antriebsstange 13 jedoch auch elektrisch leitende Abschnitte (z.B. Stiel) aufweisen. Dies ist insbesondere dann von Vorteil, wenn ein fluiddichter Verbund auszubilden ist.

Ein reversibel verformbarer Abschnitt 14 ist bevorzugt in Form eines Balges fluiddicht mit dem zweiten elektrisch leitenden Abschlusselement 8b des ersten Kapselungsgehäuses 6 verbunden. Der reversibel formveränderbare Abschnitt 14 ist mit einem fluiddichten Abschnitt, hier ein metallischer Abschnitt der Antriebsstange 13, fluiddicht verbunden, um das erste Kapselungsgehäuse 6 fluiddicht abzuschließen. Die Antriebsstange 13 ist in einem Kragen 15 des ersten Kapselungsgehäuses 6 linear geführt.

Das Innere des ersten Kapselungsgehäuses 6 ist mit einem elektrisch isolierenden Fluid bevorzugt in Gasform befüllt. Das elektrisch isolierende Fluid weist dabei gegenüber der Umgebung des Schaltpoles L2 einen erhöhten Druck auf. Üblicherweise weist die Umgebung des Schaltpoles L2 atmosphärischen Druck auf. Aufgrund der fluiddichten Ausgestaltung des ersten Kapselungsgehäuses 6 ist ein Entweichen des im Innern des ersten Kapselungsgehäuses 6 angeordneten elektrisch isolierenden Fluides verhindert. Als elektrisch isolierende Fluide sind beispielsweise Schwefelhexafluorid, Fluorketone, Fluornitrile, Stickstoff, Kohlendioxid, technische Luft etc. und Gemische mit derartigen Stoffen sowie weiteren fluorhaltigen Stoffgruppen möglich.

Das zweite Kapselungsgehäuse 9 ist in seinem Inneren mit einem reduzierten Druck ausgestattet. Der reduzierte Druck kann beispielsweise einem Vakuum entsprechen. Im Sinne dieser Beschreibung wird auch ein Vakuum als Fluid verstanden, da im Allgemeinen ein Restanteil von Ladungsträgern vorhanden ist. Der Druck im Innern des zweiten Kapselungsgehäuses 9 ist dabei gegenüber dem Druck im Innern des ersten Kapselungsgehäuses 6 reduziert. Der Druck im Innern des zweiten Kapselungsgehäuses 9 ist auch gegenüber dem Druck der Umgebung des ersten Kapselungsgehäuses 6 reduziert.

Der Faltenbalg 11 sowie der reversibel verformbare Abschnitt 14 sind dabei derart ausgeformt, dass Bewegungen gegensinnig erfolgen. D. h. eine Streckung des Faltenbalges 11 hat eine Stauchung des reversibel verformbaren Abschnittes 14 und umgekehrt zur Folge.

Um eine Bewegung von der gemeinsamen Antriebseinrichtung 4 verteilen zu können, ist am Schaltpol L2 ein Verteilergetriebe vorgesehen, welches einen schwenkbeweglichen ortsfesten Hebel 16 mit drei Hebelarmen aufweist. Der erste Hebelarm 16a des ortsfesten Hebels 16 ist mit der gemeinsamen Antriebseinrichtung 4 verbunden. Vorliegend greift die gemeinsame Antriebseinrichtung 4 aus einer vertikalen Richtung am ortfesten Hebel 16 an. Je nach Ausführungsvariante der elektrischen Schalteinrichtung kann die Richtung, aus welcher eine Antriebseinrichtung angreift, variieren. Die Antriebseinrichtung kann beispielsweise auch aus einer horizontalen oder anderen beliebigen Richtung angreifen. Über den ersten Hebelarm 16a kann eine Drehbewegung auf den ortsfesten Hebel 16 eingekoppelt werden. Weiterhin ist ein zweiter Hebelarm 16b vorgesehen, welcher eine Verteilung der Antriebsbewegung der gemeinsamen Antriebseinrichtung 4 über ein Gestänge 17a, 17b zu den benachbarten Schaltpolen L1, L3 dient. Der dritte Hebelarm 16c dient einer Einkoppelung einer Bewegung über eine Koppel 18, auf die lineare bewegbare Antriebsstange 13. Der dritte Hebelarm 16c sowie die Koppel 18 bilden so ein Kniehebelgetriebe, mittels welchem eine Drehbewegung des ortsfesten Hebels 16 in eine Linearbewegung der Antriebsstange 13 gewandelt werden kann. In Analogie zum ortsfesten Hebel 16 des Schaltpoles L2 sind an den benachbarten Schaltpolen L1, L3 gleichartige ortsfeste Hebel 16 vorgesehen, die jeweils einen korrespondierend wirkenden zweiten Hebelarm 16b sowie dritten Hebelarm 16c aufweisen und über jeweils eine Koppel 18 eine Bewegung für die bewegbaren Schaltkontaktstücke 2 der benachbarten Schaltpole L1, L3 bewirken.

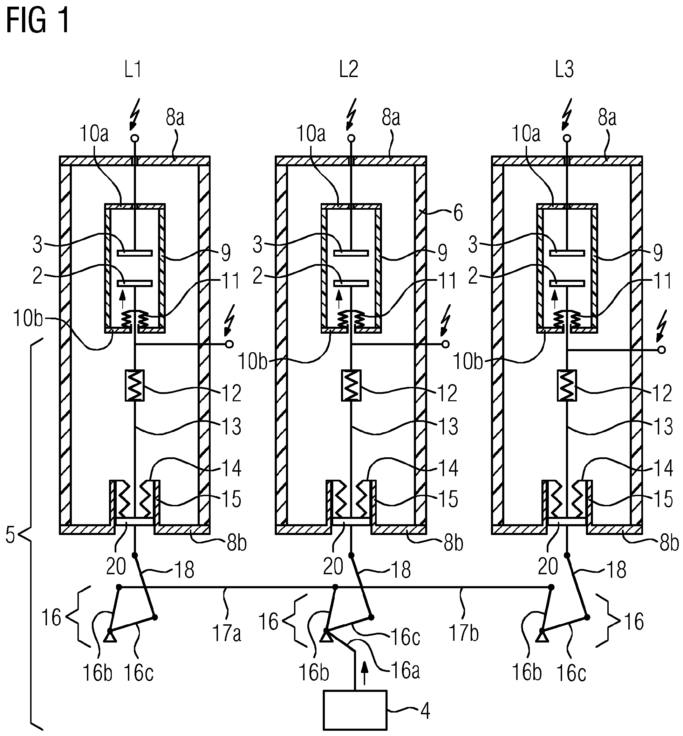

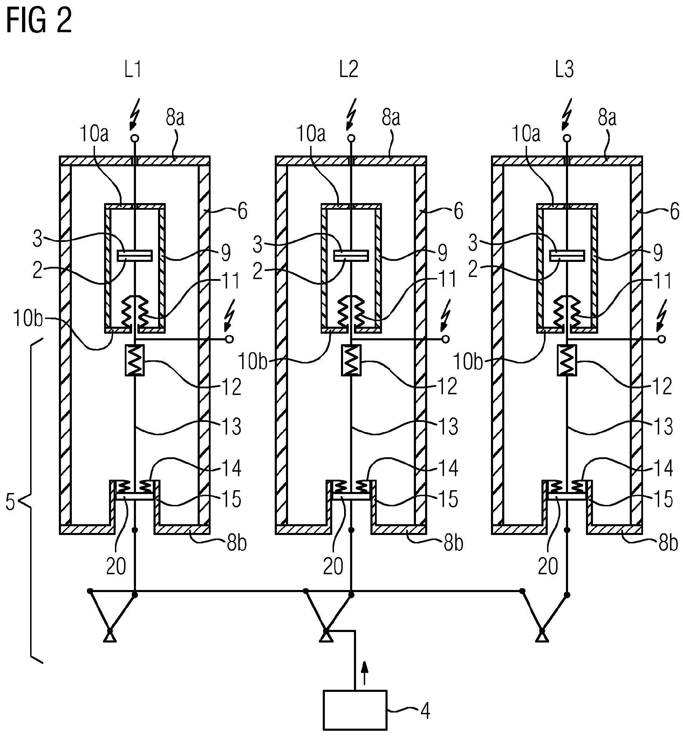

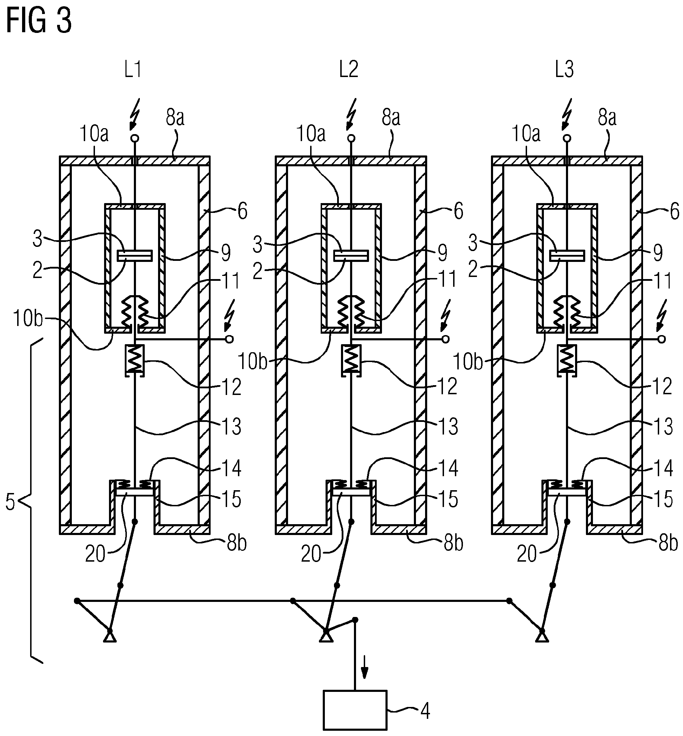

In der Figur 1 ist der Ausschaltzustand der elektrischen Schalteinrichtung dargestellt, d. h. die ortsfesten Schaltkontaktstücke 3 sind beabstandet zu den bewegbaren Schaltkontaktstücken 2 angeordnet. Zwischen den beiden Schaltkontaktstücken 2, 3 des jeweiligen Schaltpoles L1, L2, L3 ist eine geöffnete Schaltstrecke zu verzeichnen. Um eine Einschaltbewegung zu erzeugen (vgl. Pfeile an der gemeinsamen Antriebseinrichtung 4 sowie den bewegbaren Schaltkontaktstücken 2) wird eine Bewegung über den ersten Hebelarm 16a auf den ortsfesten Hebel 16 eingekoppelt. Der ortsfeste Hebel 16 rotiert entgegen dem Uhrzeigersinn. Der zweite Hebelarm 16b sowie der dritte Hebelarm 16c werden mitbewegt. Über die Koppel 18 wird eine Einschaltbewegung auf die Antriebsstange 13 übertragen und von dort unter Zwischenschaltung der Kontaktandruckfeder 12 ein Bewegen des bewegbaren Schaltkontaktstückes 2 ausgelöst. Aufgrund der Gestänge 17a, 17b wird die Bewegung des ortsfesten Hebels 16 des Schaltpoles L2 auch auf die ortsfesten Hebel 16 der benachbarten Schaltpole L1, L3 analog übertragen, wobei dort auch eine Übertragung der Bewegung über jeweils eine Koppel 18 auf das jeweilige bewegbare Schaltkontaktstück 2 erfolgt. Mit einem Voranschreiten der Einschaltbewegung kommt es zu einer Kontaktierung der bewegbaren Schaltkontaktstücke 2 mit dem jeweiligen ortsfesten Schaltkontaktstück 3 (Figur 2). Dabei kommt es zu einer Streckung des jeweiligen Balges 11 sowie einer Stauchung des reversibel verformbaren Abschnittes 14. Um eine ausreichende Kontaktandruckkraft zu erzeugen, wird auch mit einer galvanischen Berührung der jeweiligen Schaltkontaktstücke 2, 3 des jeweiligen Schaltpoles L1, L2, L3 eine Bewegung der gemeinsamen Antriebseinrichtung 4 fortgesetzt, so dass die Kontaktandruckfeder 12 in der kinematischen Kette gespannt wird. In idealer Weise wird das Kniehebelgetriebe mit Koppel 18 sowie drittem Hebelarm 16c in Strecklage gebracht, so dass die Kontaktandruckfeder 13 eine ausreichende Anpresskraft erzeugt (Figur 3).

Der Einschaltvorgang ist nunmehr abgeschlossen. Aufgrund der Druckverhältnisse innerhalb des ersten Kapselungsgehäuses 6 sowie innerhalb des zweiten Kapselungsgehäuses 9 wird bei einem Einschaltvorgang eine Bewegung durch eine Kompensation der Drücke unterstützt. In einem Idealfall können sich die Drücke im Innern des ersten Kapselungsgehäuses 6 sowie im Innern des zweiten Kapselungsgehäuses 9 zu einem Großteil kompensieren, so dass eine Antriebskraft, welche die Bewegung der kinematischen Kette 5 auszuführen hat, nicht durch zusätzliche Überwindungen von Druckunterschieden belastet zu werden braucht.

Bei einem Ausschaltvorgang erfolgt eine Umkehr der Bewegungsfolge wie in den Figuren 1, 2 und 3 gezeigt. Ausgehend von der Figur 3 wird der ortsfeste Hebel 16 im Uhrzeigersinn bewegt, wobei die Strecklage des Schubkurbelgetriebes aufgelöst wird. Zunächst entspannt sich die Kontaktandruckfeder 12, woraufhin mit ausreichender Entspannung der Kontaktandruckfeder 12 das bewegbare Schaltkontaktstück 2 von dem ortsfesten Schaltkontaktstück 3 entfernt wird (vgl. Pfeile Figur 3). Mit Erzielung der Lage, wie in der Figur 1 gezeigt, ist der Ausschaltzustand der elektrischen Schalteinrichtung erreicht.

Anhand der Figuren 4 und 5 soll ausgehend von der schematischen Darstellung der Figuren 1, 2 und 3 beispielhaft eine konstruktive Ausgestaltung des ortsfesten Hebels 16 mit Kniehebelgetriebe sowie der Ausgestaltung des reversibel verformbaren Abschnittes 14 beschrieben werden.

Die Figuren 4 und 5 zeigen jeweils einen Abschnitt des ersten Kapselungsgehäuses 6 eines Schaltpoles L2 und zwar im Bereich des zweiten elektrisch leitenden Abschlusselements 8b. Beispielhaft ist in der Figur 4 ein Abschnitt des ersten Kapselungsgehäuses 6 gezeigt. Das erste Kapselungsgehäuse 6 weist einen hohlzylindrischen elektrisch isolierenden Grundkörper auf, dessen Außenseiten mit einer Beschirmung 7 versehen ist, so dass entlang der Oberfläche des ersten Kapselungsgehäuses 6 eine Verlängerung eines Kriechweges erfolgt. Um das zweite elektrisch leitende Abschlusselement 8b auszubilden, ist dieses mehrteilig aufgebaut. Das zweite elektrische Abschlusselement 8b weist einen Armaturflansch 19 auf. Der Armaturflansch 19 ist formkomplementär stirnseitig auf das erste Kapselungsgehäuse 6 außenmantelseitig aufgesetzt und stößt an die Beschirmung 7, welche beispielsweise durch ein Silikon gebildet ist, an. Ein fluiddichter Verbund erfolgt beispielsweise durch ein Verkleben oder Verkitten des Armaturflansches 19 auf der Außenmantelfläche des rohrförmigen Grundkörpers des ersten Kapselungsgehäuses 6. Der Armaturflansch 19 stellt eine Flanschöffnung bereit, in welche ein Kragen 15 hineinragt. Der Kragen 15 ist mit einem Ringflansch ausgestattet, so dass der Ringflansch in eine formkomplementäre Ausnehmung des Armaturflansches 19 zentriert eingesetzt werden kann. Eine Fixierung von Kragen 15 sowie Armaturflansch 19 kann beispielsweise mittels einer Verschraubung erfolgen, so dass ein fluiddichter Verbund zwischen Armaturflansch 19 und dem Ringflansch des Kragens 15 gebildet ist. Entsprechend sind der Kragen 15 sowie der Armaturflansch 19 Teil des zweiten elektrisch leitenden Abschlusselementes 8b des ersten Kapselungsgehäuses 6.

Der Kragen 15 ragt rohrstutzenartig in die hohlzylindrische Ausnehmung des ersten Kapselungsgehäuses 6 hinein. Dabei ist der Kragen 15 im Wesentlichen koaxial zu Bewegungsachse der Antriebsstange 13 ausgerichtet. Der Kragen 15 umgreift die Antriebsstange 13 außenmantelseitig. Die Antriebsstange 13 weist einen fluiddichten Abschnitt 20 auf. Der fluiddichte Abschnitt 20 ist vorliegend aus einem Metall gebildet und derart ausgeformt, dass dieser an der Antriebsstange 13 einen Kolben bildet, dessen Kolbenwand gleitend in dem Kragen 15 verschiebbar ist. Dadurch ist eine Linearführung der Antriebsstange 13 in dem Kragen 15 gegeben. Der fluiddichte Abschnitt 20 ist vorliegend aus einem Metall gebildet. Gegebenenfalls kann am äußeren Umfang zur Reduzierung der Reibung ein Gleitelement, beispielsweise ein Kolbenring aus z.B. Polytetrafluorethylen angeordnet sein. Der fluiddichte Abschnitt 20 der Antriebsstange 13 ist weiterhin mit einer Lasche 21 versehen, an welcher die Koppel 18 des Kniehebelgetriebes der kinematischen Kette drehbeweglich angeschlagen ist. Der reversibel verformbare Abschnitt 14 ist vorliegend nach Art eines Faltenbalges ausgebildet, welcher im Wesentlichen eine gerade hohlzylindrische Form aufweist. Dabei ist der Mantel vielfach gewellt ausgebildet, um ein reversibles Verformen in Richtung der Bewegungsachse der Antriebsstange 13 zu unterstützen. Die Stirnseiten des balgförmigen reversibel verformbaren Abschnitts 14 sind jeweils mit Schraubflanschen fluiddicht verbunden, so dass die eine Stirnseite des reversibel verformbaren Abschnitts 14 stirnseitig mit dem Abschnitt des Kragens 15 verbunden ist, welcher in das Innere des Kapselungsgehäuses 6 frei hineinragt. Dort ist der Schraubflansch fluiddicht über Bolzen verschraubt. Das entgegengesetzte stirnseitige Ende des reversibel verformbaren Abschnitts 14 ist über den dortigen Schraubflansch mit dem fluiddichten Abschnitt 20 der Antriebsstange 13 fluiddicht verbunden. Dadurch ist zwischen dem fluiddichten Abschnitt 20 unter Umgriff eines Abschnitts der Antriebsstange 13 ein fluiddichter Verbund zu dem freien Ende des Kragens 15 gegeben. Der Kragen 15 ist somit Teil der fluiddichten Barriere, welche das erste Kapselungsgehäuse 6 fluiddicht verschließt. Weiter dient der Kragen 15 einer Linearführung der Antriebsstange 13. Über den Kragen 15 ist am ersten Kapselungsgehäuse 6 eine Tasche gebildet, die sich in das erste Kapselungsgehäuse 6 hinein senkt. Aufgrund der Verschiebbarkeit des fluiddichten Abschnitts 20 der Antriebsstange 13 ist die Tiefe der Tasche variabel ausgestaltet (vergleiche Lage des fluiddichten Abschnitts 20 in den Figuren 4 und 5). Der fluiddichte Abschnitt 20 bildet eine veränderbare Scheidewand in der Tasche.

Der von dem reversibel verformbaren Abschnitt 14 umgriffene Abschnitt der Schaltstange 13 ist vorteilhaft aus einem elektrisch isolierenden Material gebildet, welcher winkelstarr mit dem fluiddichten Abschnitt 20 verbunden ist. Um eine mechanische Beschädigung des umgriffenen Abschnitts der Antriebsstange 13 oder eine Beschädigung des reversibel verformbaren Abschnitts 14 zu verhindern, ist in dem Spalt zwischen der Antriebsstange 13 sowie dem reversibel verformbaren Abschnitt ein Balgschutz 22 angeordnet. Der Balgschutz 22 ist winkelstarr mit der Antriebsstange 13 verbunden. Bevorzugt ist die Dimensionierung des Balgschutzes 22 derart gewählt, dass die innenmantelseitig am reversibel verformbaren Abschnitt 14 befindlichen konvexen Abschnitte der Wellung mantelseitig auf dem Balgschutz 22 aufliegen und bei einer Verformung auf dem Balgschutz 22 entlang gleiten. Dadurch ist eine verbesserte Führung des reversibel verformbaren Abschnitts 14 während einer Umformung desselben gegeben.

In der Figur 4 ist der eingeschaltete Zustand des Schaltpoles L2 der elektrischen Schalteinrichtung gezeigt. Das bewegbare Schaltkontaktstück 2 ist unter Kompression der Kontaktandruckfeder 12 gegen das ortsfeste Schaltkontaktstück 3 gepresst. Bei einer Bewegung des ortsfesten Hebels 16 im Uhrzeigersinn wird das Kniehebelgetriebe zunächst aus seiner Strecklage herausbewegt und die Kontaktandruckfeder 12 wird entspannt. Nach erfolgter Entspannung der Kontaktandruckfeder 12 wird unter weiterer Fortsetzung der Bewegung des ortsfesten Hebels 16 im Uhrzeigersinn die Schaltstange 13 über die Koppel 18 in Richtung des ortsfesten Hebels 16 verschoben. Dabei kommt es zu einer Entspannung des reversibel verformbaren Abschnitts 14, d.h. der reversibel verformbare Abschnitt 14 wird gestreckt. Über die Gestänge 17a, 17b wird eine gleichartige Bewegung auch auf die ortsfesten Hebel 16 der benachbarten Schaltpole L1, L3 übertragen. Vorzugsweise gleichen die kinematischen Ketten in ihrem Aufbau sowohl im Schaltpol L2 als auch in den benachbarten Schaltpolen L1, L3 einander. In der Figur 5 ist der Ausschaltzustand des Schaltpoles L2 gezeigt. D.h. die Kontaktandruckfeder 12 ist entspannt. Der reversibel verformbare Abschnitt 14 ist gestreckt. Die am Kragen 15 gebildete Tasche ist durch das Verschieben der Antriebsstange 13 nahezu aufgehoben. Nunmehr sind ausgehend von der Figur 5 der Schaltpol L2 sowie analog die benachbarten Schaltpole L1, L3 für einen Einschaltvorgang bereit.

Bei der Ausführungsvariante gemäß den Figuren 4 und 5 ist vorgesehen, dass der reversibel verformbare Abschnitt 14 am ersten Kapselungsgehäuse 6 sowie der Balg 11 am zweiten Kapselungsgehäuse 9 gerade gegensinnig einer Streckung oder einer Stauchung unterworfen werden. Dadurch können Kräfte, die zum Strecken beziehungsweise Stauchen der linearen Dichtungen 11, 14 notwendig sind, einander zumindest teilweise aufheben. Damit kann die Antriebsenergie, welche von der gemeinsamen Antriebseinrichtung 4 bereitzustellen ist, reduziert werden. Durch die Wahl der Druckverhältnisse im Inneren des ersten Kapselungsgehäuses 6 sowie im Inneren des zweiten Kapselungsgehäuses 9 kann eine Schaltbewegung unterstützt werden. Dabei sollte der Druck im Inneren des ersten Kapselungsgehäuses 6 größer sein als der Druck im Inneren des zweiten Kapselungsgehäuses 9. Der die Schaltpole L1, L2, L3 umgebende Druck sollte geringer sein, als der Druck im Inneren des ersten Kapselungsgehäuses 6 jedoch größer als der Druck im Inneren des zweiten Kapselungsgehäuses 9.

## Patentansprüche

1. Elektrische Schalteinrichtung aufweisend ein mittels kinematischer Kette (5) antreibbares Schaltkontaktstück (2), welches von einem von der kinematischen Kette (5) fluiddicht durchsetzten ersten Kapselungsgehäuse (6) umgeben ist, wobei die kinematische Kette (5) das erste Kapselungsgehäuse (6) linear beweglich durchsetzt,
das erste Kapselungsgehäuse (6) ein zweites Kapselungsgehäuse (9) umgibt,
im ersten Kapselungsgehäuse (6) ein erster Druck und im zweiten Kapselungsgehäuse (9) ein zweiter Druck herrscht, wobei die beiden Drücke voneinander abweichen,
und der erste Druck größer als der zweite Druck ist,
**dadurch gekennzeichnet , dass**
das erste Kapselungsgehäuse (6) einen Kragen (15) aufweist,
in welchem eine Schaltstange (13) der kinematischen Kette (5) linear verschiebbar geführt ist und der Kragen (15) Teil einer eine veränderbare Scheidewand (20) aufweisenden Tasche in dem ersten Kapselungsgehäuse (6) ist, und ein reversibel verformbarer Abschnitt (14), insbesondere ein Balg, sich zwischen Schaltstange (13) und Kragen (15) erstreckend, eine lineare Dichtung übernimmt.

2. Elektrische Schalteinrichtung nach Anspruch 1,
**dadurch gekennzeichnet , dass** der Kragen (15) in eine Flanschöffnung des ersten Kapselungsgehäuses (6) hineinragt.

3. Elektrische Schalteinrichtung nach einem der Ansprüche 1 bis 2,
**dadurch gekennzeichnet, dass** Schaltstange (13), reversibel verformbarer Abschnitt (14) und Kragen (15) zueinander koaxial ausgerichtet angeordnet sind.

4. Elektrische Schalteinrichtung nach einem der Ansprüche 1 bis 3,
**dadurch gekennzeichnet , dass** zwischen Schaltstange (13) und reversibel verformbarem Abschnitt (14) und/oder zwischen reversibel verformbarem Abschnitt (14) und Kragen (15) eine Balgführung (22) angeordnet ist.

5. Elektrische Schalteinrichtung nach einem der Ansprüche 1 bis 4,
**dadurch gekennzeichnet, dass** ein das erste Kapselungsgehäuse (6) umgebender Druck kleiner als der erste Druck ist, wobei der das erste Kapselungsgehäuse (6) umgebende Druck größer oder gleich dem zweiten Druck ist.

6. Elektrische Schalteinrichtung nach einem der Ansprüche 1 bis 5,
**dadurch gekennzeichnet, dass** die linear bewegbare Schaltstange (13) über ein Kniehebelgetriebe der kinematischen Kette (5) angesteuert ist.

7. Elektrische Schalteinrichtung nach Anspruch 6,
**dadurch gekennzeichnet, dass** im Einschaltzustand der elektrischen Schalteinrichtung das Kniehebelgetriebe der kinematischen Kette (5) in Strecklage befindlich ist.

## Claims

1. An electrical switching device, having a switching contact piece (2) that is driveable by a kinematic chain (5) and that is surrounded by a first encapsulation housing (6) which is penetrated in a fluid-tight manner by the kinematic chain (5), wherein the kinematic chain (5) penetrates the first encapsulation housing (6) in a linearly moveable manner,
the first encapsulation housing (6) surrounds a second encapsulation housing (9),
a first pressure is present in the first encapsulation housing (6) and a second pressure is present in the second encapsulation housing (9), wherein the two pressures differ from one another, and the first pressure is greater than the second pressure,
**characterized in that**
the first encapsulation housing (6) has a collar (15) in which a switch rod (13) of the kinematic chain (5) is guided in a linearly displaceable manner and that the collar (15) is part of a pocket in the first encapsulation housing (6) having a variable partition (20), and that a reversibly deformable section (14), in particular a bellows, extending between switch rod (13) and collar (15), acts as a linear seal.

2. The electrical switching device according to claim 1,
**characterized in that**
the collar (15) projects into a flange opening of the first encapsulation housing (6).

3. The electrical switching device according to one of claims 1 to 2,
**characterized in that**
the switching rod (13), the reversibly deformable section (14) and the collar (15) are arranged coaxially aligned with one another.

4. The electrical switching device according to one of claims 1 to 3,
**characterized in that**
a bellows guide (22) is arranged between the switching rod (13) and the reversibly deformable section (14) and/or between the reversibly deformable section (14) and the collar (15).

5. The electrical switching device according to one of claims 1 to 4,
**characterized in that**
that a pressure surrounding the first encapsulation housing (6) is less than the first pressure, wherein the pressure surrounding the first encapsulation housing (6) is greater than or equal to the second pressure.

6. The electrical switching device according to one of claims 1 to 5,
**characterized in that**
the linearly movable switch rod (13) is actuated via a toggle lever mechanism of the kinematic chain (5).

7. The electrical switching device according to claim 6,
**characterized in that**
in the switched-on state of the electrical switching device, the toggle lever mechanism of the kinematic chain (5) is located in an extended position.

## Revendications

1. Dispositif de commutation électrique comprenant une pièce de contact de commutation (2) qui peut être entraînée au moyen d'une chaîne cinématique (5) et qui est entourée d'un premier boîtier d'encapsulation (6) à travers lequel la chaîne cinématique (5) est étanche aux fluides, dans lequel la chaîne cinématique (5) traverse le premier boîtier d'encapsulation (6) de manière linéairement mobile,
le premier boîtier d'encapsulation (6) entoure un deuxième boîtier d'encapsulation (9),
une première pression existe dans le premier boîtier d'encapsulation (6) et une deuxième pression existe dans le deuxième boîtier d'encapsulation (9), les deux pressions étant différentes l'une de l'autre, la première pression étant supérieure à la deuxième pression,
**caractérisé en ce que**,
le premier boîtier d'encapsulation (6) comporte un collier (15) dans lequel une tige de commutation (13) de la chaîne cinématique (5) est guidée de manière linéaire et déplaçable et que le collier (15) fait partie d'une poche dans le premier boîtier d'encapsulation (6) ayant une cloison variable (20), et une section déformable de manière réversible (14), en particulier un soufflet, s'étendant entre la tige de commutation (13) et le collier (15), assure un joint linéaire.

2. Dispositif de commutation électrique selon la revendication 1,
**caractérisé en ce que**,
le collier (15) fait saillie dans une ouverture de bride du premier boîtier d'encapsulation (6).

3. Dispositif de commutation électrique selon l'une quelconque des revendications 1 à 2,
**caractérisé en ce que**,
la tige de commutation (13), la section déformable de manière réversible (14) et le collier (15) sont disposés coaxialement l'un par rapport à l'autre.

4. Dispositif de commutation électrique selon l'une quelconque des revendications 1 à 3,
**caractérisé en ce**
**qu'**un guide de soufflet (22) est disposé entre la tige de commutation (13) et la section déformable de manière réversible (14) et/ou entre la section déformable de manière réversible (14) et le collier (15).

5. Dispositif de commutation électrique selon l'une quelconque des revendications 1 à 4,
**caractérisé en ce**
**qu'**une pression entourant le premier boîtier d'encapsulation (6) est inférieure à la première pression, dans lequel la pression entourant le premier boîtier d'encapsulation (6) est supérieure ou égale à la deuxième pression.

6. Dispositif de commutation électrique selon l'une quelconque des revendications 1 à 5,
**caractérisé en ce**
**que** la tige de changement de vitesse mobile linéairement (13) est commandée via un mécanisme de levier à bascule de la chaîne cinématique (5).

7. Dispositif de commutation électrique selon la revendication 6,
**caractérisé en ce**
**que** dans l'état activé du dispositif de commutation électrique, le mécanisme à levier de la chaîne cinématique (5) est en position étendue.
